# EUROPÄISCHE PATENTSCHRIFT

(11) **EP 1 696 010 B1**
(45) Veröffentlichungstag und Bekanntmachung des Hinweises auf die Patenterteilung: **01.08.2012**
(21) Anmeldenummer: 06003421.2
(22) Anmeldetag: 20.02.2006
(51) Int. Cl.: C09D 167/08, C09D 5/02

(54) **Festkörperreiche Alkydharzlacke**
High-solid coatings based on alkyd resins
Résines alkydes pour revêtements à haute teneur en matières solides

(30) Priorität: 23.02.2005 DE 102005008335
(43) Veröffentlichungstag der Anmeldung: 30.08.2006
(73) Patentinhaber: Deutsche Amphibolin-Werke von Robert Murjahn Stiftung & Co KG, 64372 Ober-Ramstadt (DE)
(72) Erfinder: Hörsting, Ingo, 48317 Drensteinfurt (DE); Anton, Peter, 64823 Gross-Umstadt (DE)
(74) Vertreter: Pfenning, Meinig & Partner GbR

(56) Entgegenhaltungen:
- WO-A-02/10297
- CA-A1- 2 054 550
- US-A- 5 530 059
- US-A- 5 883 180
- POLLOCK M: "Beyond High-Solids Baking Enamels" METAL FINISHING, ELSEVIER, NEW YORK, NY, US, Bd. 95, Nr. 7, Juli 1997 (1997-07), Seiten 10-15, XP004091581 ISSN: 0026-0576
- JOSEPH R: "Low-voc waterborne coatings" METAL FINISHING, ELSEVIER, NEW YORK, NY, US, Bd. 97, Nr. 5, 1999, Seiten 127-134, XP004166825 ISSN: 0026-0576
- PATENT ABSTRACTS OF JAPAN Bd. 2000, Nr. 26, 1. Juli 2002 (2002-07-01) & JP 2001 243838 A (HITACHI CHEM CO LTD), 7. September 2001 (2001-09-07)

## Beschreibung

Die Erfindung betrifft eine Lackzusammensetzung auf Alkydharz-Basis mit einem Gehalt an flüchtigen organischen Verbindungen (VOC) von maximal 300 g/L, sog. High Solid-Alkydharzlacke, die im Wesentlichen aus dem Alkydharz, einem Trocknungsmittel, einem Lösungsmittel, Wasser sowie weiteren Additiven besteht. Verwendung finden diese Lackzusammensetzungen als Malerlacke, Bautenlacke, Konsumlacke, Industrielacke, Maschinenlacke und/oder Fahrzeuglacke.

In den letzten Jahren strebt die Lackindustrie verstärkt nach Möglichkeiten, den Anteil an VOC in ihren Formulierungen zu reduzieren. Dies geschieht einerseits durch den Ersatz von lösemittelhaltigen Systemen durch lösungsmittelfreie oder wässrige Systeme, andererseits durch die Erhöhung des Festkörperanteils und die Reduzierung des Lösungsmittelanteils unter weitgehender Beibehaltung der bestehenden Technologie.

Im Bausektor erfolgt die Verarbeitung von Lacken weitgehend unter handwerklichen Bedingungen, was die Verwendung lösungsmittelfreier Formulierungen weitgehend ausschließt. Wässrige Lacke werden bereits eingesetzt, zeigen jedoch, bedingt durch die physikalischen Eigenschaften des Verdünnungsmittels Wasser, einige gravierende Nachteile, wie z.B. wesentlich kürzere Offenzeiten und geringere Fülle. Zudem reagieren die Lacke empfindlicher auf die bei Lagerung und Applikation herrschenden klimatischen Bedingungen, die auf Baustellen nur bedingt beeinflussbar sind.

Mit lösemittelhaltigen Bautenlacken lassen sich die Nachteile lösungsmittelfreier wässriger Formulierungen umgehen, allerdings zum Preis einer erhöhten diffusen Emission von Lösungsmitteln.

Wenn man den Gehalt an Lösungsmitteln und somit den Anteil an VOC reduziert, erhält man High Solid-Lacke. Diese haben im Vergleich zu konventionellen Lacksystemen einen erhöhten Festkörpergehalt und einen reduzierten Gehalt an flüchtigen organischen Verbindungen (Volatile Organic Content, kurz VOC). Die VOC-Werte liegen bei solchen Systemen gewöhnlich unter 300 g Lösungsmittel pro 1 L Lack (VOC < 300 g/L).

Um die geringen VOC-Werte einzustellen, müssen niedrigviskose Bindemittel mit reduziertem Molekulargewicht und höherer Reaktivität eingesetzt werden. Die veränderte Bindemittelstruktur führt aber zu verschiedenen technischen Nachteilen in der Lackformulierung. Als solche sind beispielsweise zu nennen: Schwierige Verarbeitung, geringe Standfestigkeit der applizierten Lackschicht, langsamere Durchtrocknung, erhöhte Vergilbungsneigung sowie Runzelbildung, insbesondere bei dickeren Lackschichten.

In der kanadischen Patentanmeldung CA 2 054 550 ist eine Lackzusammensetzung beschrieben, die ein wasserunlösliches Harz, ein Trocknungsmittel oder Härtungsagens, ein mit Wasser mischbares Lösungsmittel sowie Wasser enthält.

Im US-Patent US 5,530,059 ist ein Verfahren zur Herstellung einer wasserlöslichen Alkydharzzusammensetzung beschrieben, bei der eine einbasige Fettsäure, ein Fettsäureesther oder ein teilweise verseiftes Öl mit einem Glycol oder Polyol sowie einer Polycarbonsäure zur Reaktion gebracht wird und das erhaltene Gemisch mit einem Sulfomonomer oder einem Adukt, das ein Sulfomonomer enthält, vermischt wird. Das Sulfomonomer hat dabei die Funktion, als Dispergiermittel für das Harz im Wasser zu agieren.

In dem Dossier von M. Pollock, "Beyond High-Solids Baking Enamels" werden verschiedene Lacksysteme (z.B. wasserlösliche Systeme, Systeme mit einem hohen Anteil von Feststoffen sowie einem ultrahohen Anteil an Feststoffen) miteinander verglichen sowie unter ökonomischen Gesichtspunkten bewertet. Dabei wird auch qualitativ die Zusammensetzung solcher Systeme angedeutet.

Weiterhin beschreibt das US-Patent 5,883,180 eine Lackzusammensetzung mit verringertem Anteil an flüchtigen organischen Bestandteilen (VOC), ein Lösungsmittel bestehend aus einem Blockcopolymer eines Polyols und einem niedrigen Alkylenoxid sowie einem Vernetzer,' der mit dem Harz und dem Blockcopolymer reagieren kann. Die Zusammensetzung kann dabei ebenfalls Wasser enthalten.

In der internationalen Anmeldung WO 02/10297 A2 ist eine Mischung angegeben, die eine neutralisierte Dispersion eines Salzes, eines Alkydpolymers sowie einen Latex enthält. Die Mischung kann zur Herstellung einer Lackzusammensetzung mit verbesserter Widerstandfähigkeit gegen Feuchtigkeit und einer verbesserten Trocknungszeit verwendet werden.

Ausgehend hiervon war es Aufgabe der vorliegenden Erfindung, den Anteil an VOC der Lacke so zu reduzieren, dass die daraus resultierenden Lacke einen VOC-Gehalt von maximal 300 g/L aufweisen, in den Gebrauchseigenschaften und im Oberflächenbild jedoch einem konventionellen Lack entsprechen. Dies beinhaltet, die Nachteile einer High Solid-Formulierung mit VOC < 300 g/L weitgehend zu beheben, ohne auf den erhöhten Festkörper bzw. den reduzierten Lösungsmittelgehalt verzichten zu müssen. Auch sollten die Oberflächeneigenschaften der Lacke, z.B. ein guter Verlauf, leichte Verarbeitbarkeit, hohes Standvermögen, hoher Glanz, Oberflächenoptik und Beständigkeit erhalten bleiben.

Diese Aufgabe wird durch die Lackzusammensetzung mit den Merkmalen des Anspruchs 1 und die Verwendung der erfindungsgemäßen Zusammensetzung mit den Merkmalen des Anspruchs 17 gelöst. Die weiteren abhängigen Ansprüche zeigen vorteilhafte Weiterbildungen auf.

Erfindungsgemäß wird eine Lackzusammensetzung auf Alkydharz-Basis mit einem Gehalt an flüchtigen organischen Verbindungen (VOC) von maximal 300 g/L bereitgestellt, die folgende Zusammensetzung aufweist:
a) 25 bis 65 Gew.-% mindestens eines festen Alkydharzes,
b) 0 bis 40 Gew.-% mindestens eines Pigmentes und/oder Füllstoffs
c) 0,5 bis 5 Gew.-% mindestens eines Trocknungsmittels
d) 10 bis 30 Gew.-% mindestens eines aliphatischen Lösungsmittels
e) 5 bis 25 Gew.-% Wasser und
f) 0 bis 25 Gew.-% weitere Zusatzstoffe, wobei die Lackzusammensetzung frei von speziellen Zusatzstoffen zur Wasserstabilisierung ist.

Überraschenderweise können die aus dem Stand der Technik beschriebenen Qualitätsmängel bei High Solid-Alkydharzlacken durch Zugabe von Wasser oder in wasseremulgierten Alkydharzen beseitigt werden. Dabei können, abhängig von der jeweiligen Formulierung, Wassermengen von bis zu 25 Gew.-% zugesetzt werden. Bemerkenswerterweise kann die erfindungsgemäße Lackzusammensetzung vorzugsweise mit Wasser so rezeptiert werden, dass keine zusätzlichen Additive oder Maßnahmen zur Wasserstabilisierung angewendet werden müssen. Hierzu zählen beispielsweise:
o der Einbau saurer Monomere in das Bindemittel und anschließende Neutralisation,
o der Einbau polarer Monomere, z.B. Polyethylenglykol,
o die Verwendung von Netz- und Dispergiermitteln, z.B. Tenside, und
o die Verwendung polymerer Emulgatoren.

Die Lackzusammensetzung weist bevorzugt eine Viskosität im Bereich von 500 bis 1500 mPas, gemessen bei 500 l/s und 20 °C nach DIN 53019 auf.

Vorzugsweise weist die erfindungsgemäße Lackzusammensetzung vergleichbare Vergilbungs- und Farbtonbeständigkeiten wie konventionelle Lacke auf. Dies kann anhand von Messungen des Farbtonabstands ΔE*_{ab} gemäß DIN 6174 bestimmt werden, der die Anfangsdifferenz um nicht mehr als 1 ΔE*_{ab} überschreitet. Weiterhin weist die erfindungsgemäße Lackzusammensetzung vorzugsweise vergleichbare Trocknungseigenschaften wie konventionelle Alkydlacke auf.

Die Trocknung von Alkydlacken hängt stark von der jeweiligen Formulierung und den Trocknungsbedingungen ab. Unter definierten Bedingungen können die Trockenzeiten nach ASTM D 5805 in Normalklimaten (DIN 50 014) bestimmt werden. Gewöhnlich werden die ermittelten Werte vom Hersteller der Lacke in den allgemein verfügbaren technischen Merkblättern hinterlegt. Einige typische Werte von lösemittelhaltigen Alkydlacken sind in der folgenden Tabelle 1 für die verschiedenen Trocknungszustände angegeben. Die Werte wurden in diesem Fall nach ASTM D 5805 bei 20 °C/65 % rel. Luftfeuchte ermittelt:

**Tabelle 1**

| Lacktyp (Alkyd, LM-haltig) | Staubtrocken [h] | Grifffest [h] | Überstreichbar [h] |
|---|---|---|---|
| Universalgrundierung | 0,75 | 3 | 3 |
| Rostschutzgrundierung | 2-3 | 4-5 | 12 |
| Vorlack | 2 | 4 | 5-8 |
| Decklack Weiß, hochglänzend bzw. seidenglänzend | 3 | 6-8 | 12 |
| Decklack High Solid, Weiß, hochglänzend | 4-5 | 8-10 | 24-36 |

Vorzugsweise sind in der Lackzusammensetzung 5 bis 15 Gew.-% Wasser enthalten.

Die erfindungsgemäße Lackzusammensetzung enthält vorzugsweise ein lufttrocknendes, in entaromatisierten Kohlenwasserstoffen gelöstes Alkydharz als Bindemittel. Das mindestens eine Alkydharz bzw. Bindemittel kann dabei vorzugsweise in einer Konzentration von 35 bis 55 Gew.-% enthalten sein.

Als Pigmente und/oder Füllstoffe sind in der Lackzusammensetzung Titandioxid und/oder anorganische/organische Buntpigmente und/oder Füllstoffe enthalten. Diese können vorzugsweise in einer Menge von 0 bis 30 Gew.-% enthalten sein. Allerdings ist sowohl die zugegebene Menge als auch die Zusammensetzung des Pigmentes und/oder Füllstoffs stark farbtonabhängig.

Die Lackzusammensetzung enthält als Trocknungsmittel vorzugsweise metallische Trockner, besonders bevorzugt Calciumtrockner, Zirkoniumtrockner, Bariumtrockner, Cobalttrockner, Vanadiumtrockner oder Mangantrockner, gegebenenfalls in Kombination mit organischen Trocknungsbeschleunigern, wie z.B. 2,2'-Bipyridyl oder Peroxide. Diese können in einer Konzentration von vorzugsweise 3 bis 4 Gew.-%, bezogen auf die Gesamtzusammensetzung, enthalten sein.

Als aliphatisches Lösungsmittel ist bevorzugt ein Lösungsmittel ausgewählt aus der Gruppe der n-Paraffine, iso-Paraffine und Cycloparaffine enthalten. Weiter ist es vorteilhaft, wenn 20 bis 30 Gew.-% des Lösungsmittels enthalten sind.

Die in der Lackzusammensetzung enthaltenen Zusatzstoffe sind vorzugsweise ausgewählt aus der Gruppe bestehend aus Farbstoffen, Hautverhütungsmittel, Verlaufsmittel, Netzmittel, Dispergiermittel, Entschäumer, Oberflächenmittel, Rheologiemittel, Acrylatharze, Phenolharze sowie Kohlenwasserstoffe.

Verwendung finden die erfindungsgemäßen Lackzusammensetzungen als Malerlacke, Bautenlacke, Konsumlacke, Industrielacke, Maschinenlacke und/oder Fahrzeuglacke.

Anhand des nachfolgenden Beispiels soll der erfindungsgemäße Gegenstand näher erläutert werden, ohne diesen auf die hier dargestellte spezielle Ausführungsform einschränken zu wollen. Gleichzeitig sollen anhand dieses Beispiels die Vorteile gegenüber den aus.dem Stand der Technik bekannten Lacken verdeutlicht werden.

Tabelle 2 zeigt drei Lackzusammensetzungen, wobei Lack 1 und Lack 2 aus dem Stand der Technik bekannte Lacke darstellen, während Lack 3 einem erfindungsgemäßen Lacke entspricht.

**Tabelle 2**

| **Rohstoffe** | **Lack 1 Konventionell** | **Lack 2 High-Solid** | **Lack 3 High Solid + H₂O** |
|---|---|---|---|
| Konventionelles Alkyd-Bindemittel (60 % in Aliphat D40) | 40 | | |
| High Solid-Bindemittel 100 % | | 37 | 25 |
| Aliphat D40 | 3 | 5 | |
| Aliphat D60 | | | 4 |
| Titandioxid-Paste (60 wt % TiO₂ Alkyd als Trägerharz) | 50 | 50 | 50 |
| Kombi-Trockner (0.8 wt % Co) | 2 | 3 | 2 |
| Zirkoniumtrockner (12 wt % Zr) | 1 | 1 | 1 |
| Aliphat D40 (Lösungsmittel) | 3,7 | 3,7 | 3,7 |
| Aliphat D60 (Lösungsmittel) | | | 2 |
| Hautverhütungsmittel, z.B. MEKO | 0,3 | 0,3 | 0,3 |
| Wasser | | | 12 |
| | 100 | 100 | 100 |

Die so hergestellten Lacke wurden anhand der gängigen Lackparameter und der Eigenschaften der Lackfilme miteinander verglichen. Diese Parameter und Eigenschaften sind in der nachfolgenden Tabelle 3 gegenüber gestellt.

**Tabelle 3**

| Lack-Parameter | Lack 1 Konventionell | Lack 2 High-Solid | Lack 3 High Solid + H₂O |
|---|---|---|---|
| Bindemittelfestkörper % | 32,4 | 45,4 | 33,4 |
| Festkörper Masse % | 62,4 | 75,4 | 63,4 |
| Festkörper Volumen % | 47 | 65 | 50 |
| VOC-Gehalt g/L | 423 | 285 | 285 |
| Kobalt-Gehalt auf Bindemittelfestkörper % | 0,05 | 0,05 | 0,05 |
| Dichte g/ml | 1,16 | 1,21 | 1,21 |
| Viskosität mPa.s (6000 1/s) | 620 | 980 | 620 |
| Eigenschaften der Lackfilme | | | |
| Weißindex 24 h/40°C (Lenetafolie Rakel NSD:200 µm) | 77,8 | 76,7 | 78,7 |
| Gelbindex 24 h/40°C (Lenetafolie Rakel NSD:200 µm) | 5,1 | 5,53 | 4,7 |
| Maximale Standfestigkeit [µm] (Erichsen 419) | 125 | 75 | 200 |
| Verlauf, visuell (Pinsel-Applikation) | Sehr gut | Sehr gut | Sehr gut |
| Trocknung (Pinsel-Applikation) | Gut | Schlecht | Gut |
| Trockenzeiten nach ASTM D5895 (20 °C, 65 % rel. Luftfeuchte) | | | |
| I: staubtrocken | I: 5,5 h | I: 3,5 h | I: 1,0 h |
| II: grifffest | II: 7,0 h | II: 5,5 h | II: 3,0 h |
| IV: überstreichbar | IV: 10,5 h | IV: 21,0 h | III: 12,0 h |
| Filmhärte, gemessen als Pendelhärte nach 24 h [s] (Rakel NSD:150 *µ*m) | 9,9 | 5,7 | 8,5 |
| Glanz 20° nach 24 h (Glasplatte Rakel NSD:150 *µ*m) | 87 | 86 | 85 |
| Verschleierung der Oberfläche: Haze-Werte nach 24 h (Glasplatte Rakel NSD:150 *µ*m) | 23 | 16 | 24 |

Der Vergleich der Eigenschaften der Lacke und den daraus hergestellten Beschichtungen zeigt folgendes:
• Das Einarbeiten von Wasser in die Rezeptur von Lack 3 erfordert keinen Zusatz von Additiven oder Spezialharzen zur Stabilisierung des Wassers in der unpolaren Matrix. Die erhaltene Formulierung ist lagerstabil.
• Die Lacke 2 und 3 liegen im VOC-Gehalt deutlich niedriger als der konventionelle Lack 1, erstere sind somit gemäß der Definition VOC < 300 g/L High-Solid-Formulierungen.
• Die Viskositätswerte von Lack 1 und Lack 3 liegen niedriger als bei Lack 2, was sich günstig auf die Verarbeitbarkeit auswirkt.
• Die Glanzwerte von den Lacken 1 bis 3 sind vergleichbar und die Hazewerte liegen ähnlich; die Optik der Lacke ist somit ähnlich.
• Der Weißindex der Lacke 1 und 3 liegt höher und der Gelbindex niedriger als bei Lack 2; sie erscheinen somit weißer und sind beständiger gegen Vergilbung.
• Die Durchtrocknung von Lack 3 verläuft wesentlich schneller als die von Lack 2 und ist vergleichbar mit dem konventionellen Alkydlack.
• Die Filmhärte und somit die mechanische Beständigkeit von den Lacken 1 und 3 liegt höher bzw. wird in kürzerer Zeit erreicht.
• Die Standfestigkeit ist deutlich höher und übertrifft sogar den konventionellen Alkydlack 1. Lack 3 kann somit in höherer Schichtstärke aufgetragen werden, ohne dass der Lack abzulaufen beginnt (Läuferbildung).

Die Ergebnisse legen nahe, dass die Eigenschaften des High-Solid-Lacks 3, also der wasserhaltigen High-Solid-Formulierung und der daraus hergestellten Beschichtung sich merklich von Lack 2 unterscheidet. dagegen liegen Lack 3 und der konventionelle Lack 1 sehr ähnlich in ihren Werten.

Somit gelingt es, durch den Zusatz von Wasser in die Lackformulierung die Nachteile von High-Solid-Lacken mit VOC < 300 g/L zu beheben, ohne auf den erhöhten Festkörper bzw. den reduzierten Lösemittelgehalt verzichten zu müssen. Die so rezeptierten Lacke gleichen in ihren Eigenschaften wie Verarbeitbarkeit, Standvermögen, Glanz, Oberflächenoptik und Beständigkeit durchaus konventionellen Lacken.

## Patentansprüche

1. Lackzusammensetzung auf Alkydharz-Basis mit einem Gehalt an flüchtigen organischen Verbindungen (VOC) von maximal 300 g/L mit folgender Zusammensetzung:
a) 25 bis 65 Gew.-% mindestens eines festen Alkydharzes mit der Maßgabe, dass in das Bindemittel keine sauren oder polaren Monomere eingebaut sind,
b) 0 bis 40 Gew.-% mindestens eines Pigmentes und/oder Füllstoffs,
c) 0,5 bis 5 Gew.-% mindestens eines Trocknungsmittels,
d) 10 bis 30 Gew.-% mindestens eines aliphatischen Lösungsmittels, ausgewählt aus der Gruppe der n-Paraffine, iso-Paraffine und Cycloparaffine
e) 5 bis 25 Gew.-% Wasser und
f) 0 bis 25 Gew.-% weitere Zusatzstoffe, wobei die Lackzusammensetzung frei von Zusatzstoffen zur Wasserstabilisierung ist.

2. Lackzusammensetzung nach Anspruch 1,
**dadurch gekennzeichnet, dass** die Zusatzstoffe zur Wasserstabilisierung ausgewählt sind aus der Gruppe der Netz- und Dispergiermittel, insbesondere Tenside, und polymerer Emulgatoren.

3. Lackzusammensetzung nach einem der vorhergehenden Ansprüche,
**dadurch gekennzeichnet, dass** die Lackzusammensetzung eine Viskosität im Bereich von 500 bis 1500 mPas, gemessen bei 500 l/s und 20°C nach DIN 53019, aufweist.

4. Lackzusammensetzung nach einem der vorhergehenden Ansprüche,
**dadurch gekennzeichnet, dass** die Lackzusammensetzung vergleichbare Vergilbungs- und Farbtonbeständigkeiten wie konventionelle Lacke aufweist, gemessen als Farbtonabstand ΔE*_{ab} nach DIN 6174, welcher die Anfangsdifferenz um nicht mehr als 1 ΔE*_{ab} überschreitet.

5. Lackzusammensetzung nach einem der vorhergehenden Ansprüche,
**dadurch gekennzeichnet, dass** die Lackzusammensetzung vergleichbare Trocknungseigenschaften zu konventionellen Alkydlacken aufweist, gemessen z.B. als Trockenzeit nach ASTM D 5805.

6. Lackzusammensetzung nach einem der vorhergehenden Ansprüche,
**dadurch gekennzeichnet, dass** 5 bis 15 Gew.-% Wasser enthalten sind.

7. Lackzusammensetzung nach einem der vorhergehenden Ansprüche,
**dadurch gekennzeichnet, dass** das Alkydharz ein lufttrocknendes, in entaromatisierten Kohlenwasserstoffen lösliches Alkydharz ist.

8. Lackzusammensetzung nach einem der vorhergehenden Ansprüche,
**dadurch gekennzeichnet, dass** 35 bis 55 Gew.-% des Bindemittels enthalten sind.

9. Lackzusammensetzung nach einem der vorhergehenden Ansprüche,
**dadurch gekennzeichnet, dass** 0 bis 30 Gew.-% des Pigmentes und/oder Füllstoffs enthalten sind.

10. Lackzusammensetzung nach einem der vorhergehenden Ansprüche,
**dadurch gekennzeichnet, dass** als Pigment Titandioxid und/oder anorganische/organische Buntpigmente enthalten sind.

11. Lackzusammensetzung nach einem der vorhergehenden Ansprüche,
**dadurch gekennzeichnet, dass** 3 bis 4 Gew.-% bezogen auf die Gesamtzusammensetzung des Trocknungsmittels enthalten sind.

12. Lackzusammensetzung nach einem der vorhergehenden Ansprüche,
**dadurch gekennzeichnet, dass** als Trocknungsmittel metallische Trockner, wie z.B. Calciumtrockner, Zirkoniumtrockner, Bariumtrockner, Kobalttrockner, Mangantrockner oder Vanadiumtrockner, gegebenenfalls in Kombination mit organischen Trocknungsbeschleunigern, wie z.B. 2,2-Bipyridyl oder Peroxide, enthalten sind.

13. Lackzusammensetzung nach einem der vorhergehenden Ansprüche,
**dadurch gekennzeichnet, dass** 20 bis 30 Gew.-% des Lösungsmittels enthalten sind.

14. Lackzusammensetzung nach einem der vorhergehenden Ansprüche,
**dadurch gekennzeichnet, dass** die Zusatzstoffe ausgewählt sind aus der Gruppe bestehend aus Farbstoffen, Hautverhütungsmittel, Verlaufsmittel, Netzmittel, Dispergiermittel, Entschäumer, Oberflächenmittel, Rheologiemittel, Acrylatharze, Phenolharze sowie Kohlenwasserstoffharze.

15. Verwendung der Lackzusammensetzung nach einem der Ansprüche 1 bis 14 als Malerlacke, Bautenlacke, Konsumlacke, Industrielacke, Maschinenlacke und/oder Fahrzeuglacke.

## Claims

1. Paint composition based on an alkyd resin with a content of volatile organic compounds (VOC) of at most 300 g/l, having the following composition:
a) 25 to 65% by weight of at least one solid alkyd resin with the proviso that no acidic or polar monomers are incorporated in the binding agent,
b) 0 to 40% by weight of at least one pigment and/or filler,
c) 0.5 to 5% by weight of at least one drying agent,
d) 10 to 30% by weight of at least one aliphatic solvent, selected from the group of n-paraffins, isoparaffins and cycloparaffins,
e) 5 to 25% by weight of water and
f) 0 to 25% by weight of further additives, the paint composition being free of additives for water stabilisation.

2. Paint composition according to claim 1,
**characterised in that** the additives for water stabilisation are selected from the group of wetting agents and dispersants, in particular surfactants, and polymeric emulsifiers.

3. Paint composition according to one of the preceding claims,
**characterised in that** the paint composition has a viscosity in the range of 500 to 1,500 mPas, measured at 500 l/s and 20°C according to DIN 53019.

4. Paint composition according to one of the preceding claims,
**characterised in that** the paint composition has comparable resistance to yellowing and colour fastness to conventional paints, measured as colour difference ΔE*_{ab} according to DIN 6174, which exceeds the initial difference by no more than 1 ΔE*_{ab}.

5. Paint composition according to one of the preceding claims,
**characterised in that** the paint composition has comparable drying properties to conventional alkyd paints, measured for example as drying time according to ASTM D 5805.

6. Paint composition according to one of the preceding claims,
**characterised in that** there are contained 5 to 15% by weight of water.

7. Paint composition according to one of the preceding claims,
**characterised in that** the alkyd resin is an air-drying alkyd resin which is soluble in dearomatised hydrocarbons.

8. Paint composition according to one of the preceding claims,
**characterised in that** there are contained 35 to 55% by weight of the binding agent.

9. Paint composition according to one of the preceding claims,
**characterised in that** there are contained 0 to 30% by weight of the pigment and/or filler.

10. Paint composition according to one of the preceding claims,
**characterised in that** there are contained as pigment, titanium dioxide and/or inorganic/organic colour pigments.

11. Paint composition according to one of the preceding claims,
**characterised in that** there are contained 3 to 4% by weight, relative to the total composition, of the drying agent.

12. Paint composition according to one of the preceding claims,
**characterised in that** there are contained as drying agents, metallic drying agents, such as e.g. calcium drying agents, zirconium drying agents, barium drying agents, cobalt drying agents, manganese drying agents or vanadium drying agents, possibly in combination with organic drying accelerators, such as e.g. 2, 2-bipyridyl or peroxides.

13. Paint composition according to one of the preceding claims,
**characterised in that** there are contained 20 to 30% by weight of the solvent.

14. Paint composition according to one of the preceding claims,
**characterised in that** the additives are selected from the group consisting of colourants, skin protection agents, flow improvers, wetting agents, dispersants, defoamers, surfactants, rheological agents, acrylate resins, phenol resins and also hydrocarbon resins.

15. Use of the paint composition according to one of the claims 1 to 14 as artists' paints, constructional paints, consumer paints, industrial paints, machine paints and/or vehicle paints.

## Revendications

1. Composition de vernis ou de peinture à base de résine alkyde avec une teneur en composés organiques volatils (VOC) de 300 g/l au maximum, avec la composition suivante :
a) 25 à 65 % en poids d'au moins une résine alkyde solide à la condition qu'aucun monomère acide ou polaire ne soit incorporé dans le liant,
b) 0 à 40 % en poids d'au moins un pigment et/ou une charge,
c) 0,5 à 5 % en poids d'au moins un produit siccatif,
d) 10 à 30 % en poids d'au moins un solvant aliphatique, choisi dans le groupe des n-paraffines, iso-paraffines et cycloparaffines,
e) 5 à 25 % en poids d'eau et
f) 0 à 25 % en poids d'autres additifs, sachant que la composition de vernis ou de peinture est exempte d'additifs pour la stabilisation de l'eau.

2. Composition de vernis ou de peinture selon la revendication 1,
**caractérisée en ce que**
les additifs pour la stabilisation de l'eau sont choisis dans le groupe des agents mouillants et des agents dispersants, en particulier des tensioactifs et des émulsifiants polymères.

3. Composition de vernis ou de peinture selon l'une quelconque des revendications précédentes,
**caractérisée en ce que** la composition de vernis ou de peinture présente une viscosité comprise dans l'intervalle de 500 à 1500 mPa s, mesurée à 500 l/s et 20 °C selon la norme DIN 53019.

4. Composition de vernis ou de peinture selon l'une quelconque des revendications précédentes,
**caractérisée en ce que** la composition de vernis ou de peinture présente une résistance au jaunissement et une stabilité de la teinte comparables à celle des vernis ou peintures conventionnels, mesurées comme écart de teinte ΔE*_{ab} selon la norme DIN 6174, lequel ne dépasse pas la différence initiale de plus de 1 ΔE*_{ab}.

5. Composition de vernis ou de peinture selon l'une quelconque des revendications précédentes,
**caractérisée en ce que** la composition de vernis ou de peinture présente des propriétés de séchage comparables à celles des vernis ou peintures alkydes conventionnels, mesurées par exemple comme temps de séchage selon ASTM D 5805.

6. Composition de vernis ou de peinture selon l'une quelconque des revendications précédentes,
**caractérisée en ce que** 5 à 15 % en poids d'eau y sont contenus.

7. Composition de vernis ou de peinture selon l'une quelconque des revendications précédentes,
**caractérisée en ce que** la résine alkyde est une résine alkyde séchant à l'air, soluble dans des hydrocarbures désaromatisés.

8. Composition de vernis ou de peinture selon l'une quelconque des revendications précédentes,
**caractérisée en ce que** 35 à 55 % en poids du liant y sont contenus.

9. Composition de vernis ou de peinture selon l'une quelconque des revendications précédentes,
**caractérisée en ce que** 0 à 30 % en poids du pigment et/ou de la charge y sont contenus.

10. Composition de vernis ou de peinture selon l'une quelconque des revendications précédentes,
**caractérisée en ce que** du dioxyde de titane et/ou des pigments de couleur inorganiques/organiques y sont contenus comme pigments.

11. Composition de vernis ou de peinture selon l'une quelconque des revendications précédentes,
**caractérisée en ce que**, rapportés à l'ensemble de la composition, 3 à 4 % en poids du produit siccatif y sont contenus.

12. Composition de vernis ou de peinture selon l'une quelconque des revendications précédentes,
**caractérisée en ce que** comme produit siccatif y sont contenus des siccatifs métalliques comme par exemple un siccatif au calcium, un siccatif au zirconium, un siccatif au baryum, un siccatif au cobalt, un siccatif au manganèse ou un siccatif au vanadium, le cas échéant en combinaison avec des accélérateurs de séchage organiques comme par exemple du 2,2-bipyridyle ou des peroxydes.

13. Composition de vernis ou de peinture selon l'une quelconque des revendications précédentes,
**caractérisée en ce que** 20 à 30 % en poids du solvant y sont contenus.

14. Composition de vernis ou de peinture selon l'une quelconque des revendications précédentes,
**caractérisée en ce que** les additifs sont choisis dans le groupe constitué des colorants, des agents anti-peau, des agents d'écoulement, des agents mouillants, des agents dispersants, des antimousses, des agents de surface, des agents rhéologiques, des résines d'acrylate, des résines phénoliques ainsi que des résines d'hydrocarbures.

15. Utilisation de la composition de vernis ou de peinture selon l'une quelconque des revendications 1 à 14 comme peintures décoratives, peintures pour bâtiment, peintures grand public, peintures industrielles, peintures pour machines et/ou peintures pour l'automobile.
